# EUROPEAN PATENT APPLICATION

(11) **EP 1 308 525 A2**
(43) Date of publication of application: **07.05.2003**
(21) Application number: 02023451.4
(22) Date of filing: 21.10.2002
(51) Int. Cl.: C21D 1/09, C21D 11/00, B23K 26/00

(54) **Method of controlling hardening with laser beam and laser beam hardening device**

(30) Priority: 30.10.2001 JP 2001332993; 13.12.2001 JP 2001379381
(71) Applicant: YAMAZAKI MAZAK KABUSHIKI KAISHA, Niwa-Gun, Aichi-Ken (JP)
(72) Inventor: Yamazaki, Tsunehiko, Nagoya-shi, Aichi-ken (JP); Miyagawa, Naoomi, Gifu-shi, Gifu-ken (JP); Inoue, Toshihiko, Komaki-shi, Aichi-ken (JP); Asari, Toshihiko, Komaki-shi, Aichi-ken (JP); Matsumura, Masaru, Toyonaka-shi, Oosaka-fu (JP)
(74) Representative: Bauer, Wulf, Dr.

(57) **Abstract**

In hardening with laser beam by irradiating laser beam 29 on a workpiece 27, oscillating the laser beam so as to heat a workpiece with a hardening width W1, laser beam output in both end portions (times (1), (5), (6), (10) of Fig.4, for instance) of amplitude of the laser beam is made lower than one of a center portion (times (3), (4), (7), (8) of Fig.4, for instance) of the amplitude. Relative moving velocity of the laser beam with respect to workpiece is decreased, and the quantity of giving energy of the laser beam in both end portions of the amplitude where the density of giving energy of laser beam is high is decreased so as to equalize quantity of aiming energy in the whole hardening cycle. By doing so, a proper hardening action is possible.

## Description

### BACKGROUND OF THE INVENTION

This invention relates to a method of controlling hardening with laser beam and a laser beam hardening device, capable of correctly measuring and controlling temperature of a portion to be hardened.

A method of hardening on a workpiece with a predetermined width by oscillating laser beam in a direction intersecting a feeding direction has been recently proposed. But, it is necessary to correctly detect the temperature of a portion to be hardened and to control the temperature of the portion for proper hardening.

However, such temperature control is not executed in a conventional laser beam hardening device. And, a method of measuring the temperature of the portion to be hardened by detecting the portion to be hardened from the outside by an infrared sensor or the like is also thinkable. But, it is difficult to trail a torch by a sensor, and this method is not practical since the torch for injecting the laser beam takes a complicated action so as to oscillate laser beam in a direction intersecting the feeding direction or to three-dimensionally harden, as mentioned before.

In the method of hardening on a workpiece with a predetermined width by oscillating laser beam in the direction intersecting the feeding direction, furthermore, the moving velocity of the laser beam for hardening with respect to a workpiece always changes although a workpiece can be hardened with an optional width. If a constant output of the laser beam is only irradiated on a workpiece, therefore, the radiation energy per unit area in the portion to be hardened of a workpiece is too high in the position where the relative velocity of the laser beam with respect to the workpiece is decreased so as to melt the workpiece. On the contrary, the radiation energy per unit area is too low in the position where the relative velocity of the laser beam with respect to the workpiece is increased so as not to raise the temperature of the workpiece up to a predetermined hardening temperature and then, so as not to harden, inconveniently. Therefore, a proper hardening action is impossible if the quantity of radiation energy of laser beam on a workpiece is not properly controlled, fitting to the amplitude of the laser beam in addition to correct measurement of the temperature of the portion to be hardened.

Therefore, the method of controlling hardening with laser beam and the laser beam hardening device, capable of properly controlling the radiation energy of the laser beam on the workpiece, fitting to the amplitude of the laser beam, and executing a proper hardening action are desired to be provided.

Besides, the laser beam hardening device capable of correctly measuring the temperature of a portion to be hardened even if a torch takes a complicated action as mentioned before, and controlling the temperature of the portion is desired to be provided.

### SUMMARY OF THE INVENTION

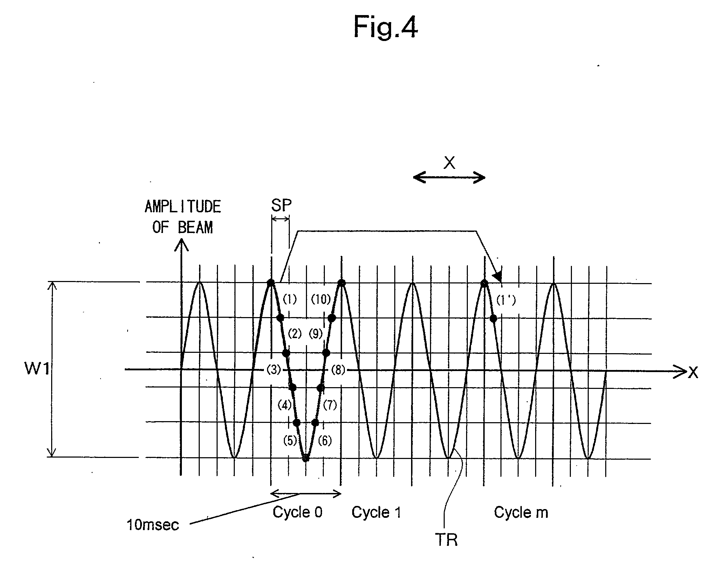

The present invention is method of controlling hardening with laser beam by irradiating laser beam on a workpiece, comprising:
irradiating said laser beam on a workpiece, oscillating with a predetermined amplitude so as to heat said workpiece over a predetermined hardening width by said oscillating laser beam; and
controlling laser beam output of said laser beam in such a manner that said laser beam output in both end portions (times (1), (5), (6), (10) of Fig.4, for instance) of said amplitude is made lower than one of a center portion (times (3), (4), (7), (8) of Fig.4, for instance) of said amplitude.

According to this, the laser beam output in the both end portions (times (1), (5), (6), (10) of Fig.4, for instance) of the amplitude of the laser beam is made lower than one of a center portion (times (3), (4), (7), (8) of Fig.4, for instance) of the amplitude, thereby the relative moving velocity of the laser beam with respect to the workpiece is decreased and the quantity of giving energy of the laser beam in both end portions of the amplitude where the density of giving energy is high can be decreased so as to equalize quantity of aiming energy in the whole hardening cycle. By doing so, a proper hardening action is possible.

The present invention is that said laser beam output is adjusted so that a hardening temperature of said workpiece when it is heated by irradiating said laser beam becomes a predetermined hardening temperature in all portions to be hardened of said workpiece.

According to this, the laser beam output is adjusted so that the hardening temperature becomes a predetermined hardening temperature in all portions to be hardened of a workpiece, thereby the quantity of irradiating energy can be equalized in the whole hardening cycle, and a proper hardening action is possible.

The present invention is that said hardening temperature of said workpiece is measured by acquiring reflecting light of said laser beam irradiating on said workpiece.

According to this, the hardening temperature of a workpiece is measured by acquiring the reflecting light of the laser beam irradiating on the workpiece, thereby the temperature of the portion to be hardened is correctly gotten, and a proper hardening is possible.

The present invention is that a laser beam output pattern corresponding to a hardening action is prepared, and said laser beam output of said laser beam is controlled in such a manner that said laser beam output in both end portions of said amplitude is made lower than one of said center portion of said amplitude on the basis of said laser beam output pattern.

According to this, the laser beam output in both end portions of the amplitude of the laser beam is controlled to being made lower than one in the center portion of the amplitude on the basis of the laser beam output pattern, thereby the temperature of the portion to be hardened can be easily controlled without using complex feedback control, and a proper hardening action is possible.

The present invention is method of controlling hardening with laser beam when hardening with laser beam is done by irradiating laser beam on a workpiece, comprising:
forming a hardening cycle by a track of said laser beam by irradiating said laser beam on said workpiece, oscillating said laser beam with a predetermined amplitude and executing two or more cycles of said hardening cycle so as to harden said workpiece;
detecting a temperature of a portion to be hardened of said workpiece at some point of time (time (1) of cycle 0 of hardening cycle of Fig.4, for instance) during said hardening cycle and adjusting laser beam output of said laser beam in a subsequent hardening cycle after said temperature of said portion to be hardened is detected (cycle m of hardening cycle of Fig.4, for instance) on the basis of a deflection between said temperature detected and a predetermined hardening temperature; and
controlling density of energy of said laser beam giving to said workpiece in said hardening cycle so as to make equal during said subsequent hardening cycle.

According to this, a temperature of a portion to be hardened of the workpiece is detected at some point of time (time (1) of cycle 0 of hardening cycle of Fig.4, for instance) during the hardening cycle and the laser beam output of the laser beam is adjusted in a subsequent hardening cycle after the temperature of the portion to be hardened is detected (cycle m of hardening cycle of Fig.4, for instance) on the basis of a deflection between the temperature detected and a predetermined hardening temperature, thereby the laser beam output can be properly adjusted even if extremely high speed hardening cycle is used, and the hardening action with high credibility can be executed.

The present invention is that a point of time when said laser beam output is adjusted during said subsequent hardening cycle (time (1') of cycle m of hardening cycle of Fig.4, for instance) is the same phase in said hardening cycle as a point of time when temperature of said portion to be hardened of said workpiece is detected (time (1) of cycle 0 of hardening cycle of Fig.4, for instance).

According to this, a point of time when the laser beam output is adjusted during the subsequent hardening cycles (time (1') of cycle m of hardening cycle of Fig.4, for instance) is the same phase in the hardening cycle as a point of time when the temperature of the portion to be hardened of the workpiece is detected (time (1) of cycle 0 of hardening cycle of Fig.4, for instance) , thereby the laser beam output to the portion to be hardened, which resembles in the condition of the same phase in the hardening cycle, can be adjusted, reflecting the detected temperature of the past hardening cycle, and then, the credibility is high.

The present invention of laser beam hardening device, comprising:
a laser beam oscillator;
a guide means for guiding laser beam injected from said laser beam oscillator;
a condensing lens located at said guide means for collecting said laser beam and irradiating said laser beam to a portion to be hardened of a workpiece;
a beam oscillating means for oscillating said laser beam with a predetermined amplitude; and
a laser beam output controlling means for controlling laser beam output of said laser beam in such a manner that said laser beam output in both end portions of said amplitude is made lower than one of a center portion of said amplitude.

The present invention is laser beam hardening device, comprising:
a laser beam oscillator;
a guide means for guiding laser beam injected from said laser beam oscillator;
a condensing lens located at said guide means for collecting said laser beam and irradiating said laser beam to a portion to be hardened of a workpiece;
a beam oscillating means for oscillating said laser beam with a predetermined amplitude;
a temperature detecting means for detecting temperature of said portion to be hardened of said workpiece;
a target laser beam output computing means for computing a target laser beam output to be an object from a deflection between said temperature detected and a predetermined hardening temperature on the basis of temperature of said portion to be hardened of said workpiece of some point of time in a hardening cycle, which is detected by said temperature detecting means; and
a laser beam output controlling means for adjusting said laser beam output of said laser beam on the basis of said target laser beam output computed in a subsequent hardening cycle after said temperature of said portion to be hardened is detected.

The present invention is laser beam hardening device, comprising:
a laser beam oscillator;
a guide means for guiding laser beam injected from said laser beam oscillator;
a condensing lens located at said guide means for collecting said laser beam and irradiating said laser beam to a portion to be hardened of a workpiece;
a beam splitter provided in said guide means between said laser beam oscillator and said condensing lens for sorting reflecting light reflected from said portion to be hardened; and
a temperature measuring means provided at said beam splitter for measuring temperature of said portion to be hardened from said reflecting light sorted by said beam splitter.

According to this, the temperature can be measured by directly catching the reflecting light reflected from the portion to be hardened by the beam splitter, thereby the reflecting light from the portion to be hardened can be correctly caught even if the condensing lens and the workpiece are relatively moved in any form, and the temperature of the portion to be hardened can be correctly measured without providing an additional complex mechanism.

The present invention is that a beam oscillating means for oscillating said laser beam with a predetermined width is provided between said beam splitter and said condensing lens.

According to this, a beam oscillating means is provided between the beam splitter and the condensing lens, thereby the beam splitter is located upstream of the beam oscillating means so that the reflecting light of the laser beam can be correctly caught even if the laser beam is controlled to be oscillated by the beam oscillating means.

The present invention is that said temperature measuring means is an infrared thermometer.

According to this, the temperature can be measured with a simple structure by using an infrared thermometer which is general in the temperature measurement using light wave.

The present invention is that said condensing lens is provided, being relatively movable and drivable in a three-dimensional direction with respect to said workpiece.

According to this, the beam splitter for sorting and supplying the reflecting light to the temperature measuring means is provided in the guide means although the condensing lens is relatively movable and drivable in a three-dimensional direction, thereby the temperature of the portion to be hardened can be correctly measured even if the condensing lens is in any posture.

### BRIEF DESCRIPTION OF THE DRAWINGS

Fig.1 is a schematic perspective view for showing an important portion of a laser beam hardening device to which the present invention is applied;
Fig.2 is a block diagram for showing an important portion of a NC unit;
Fig.3 is a schematic view for showing contents of a laser beam output value memory;
Fig.4 is a view for showing a hardening track of laser beam;
Fig.5 is a schematic view for showing contents of each data block in the laser beam output value memory; and
Fig.6(a) is a chart for showing the track of laser beam (hardening cycle), Fig.6(b) is a chart for showing velocity of laser beam corresponding to (a) with respect to a workpiece, Fig.6(c) is a chart for showing an example of a laser beam output pattern corresponding to (a), and Fig.6(d) is a chart for showing the other example of the laser beam output pattern corresponding to (a).

### DESCRIPTION OF THE PREFERRED EMBODIMENTS

Embodiments of the present invention will now be explained hereinafter, referring to drawings.

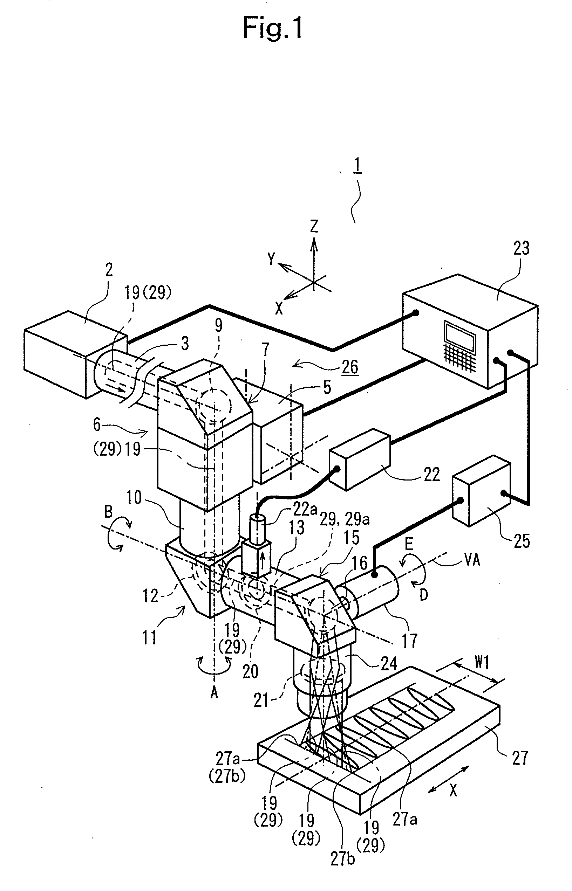

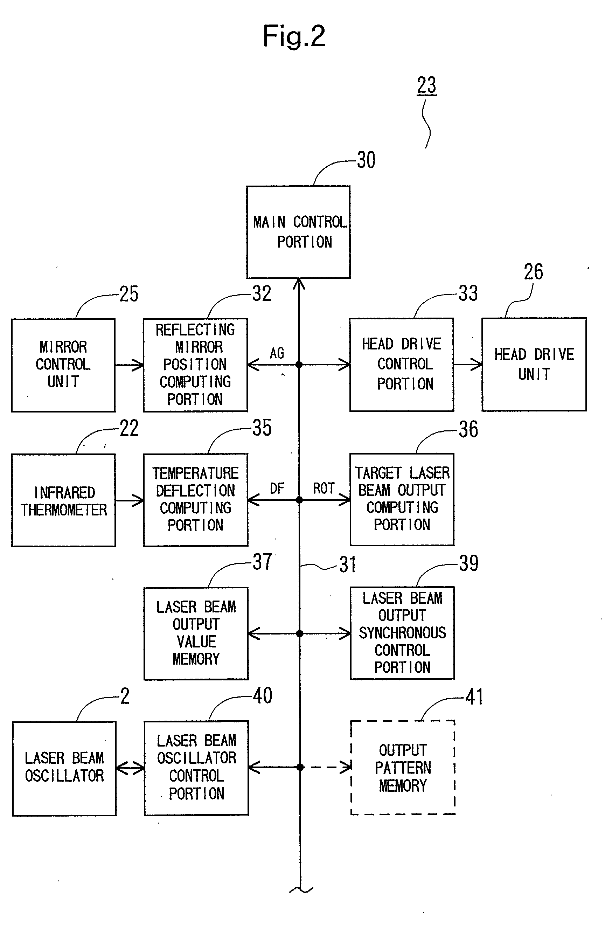

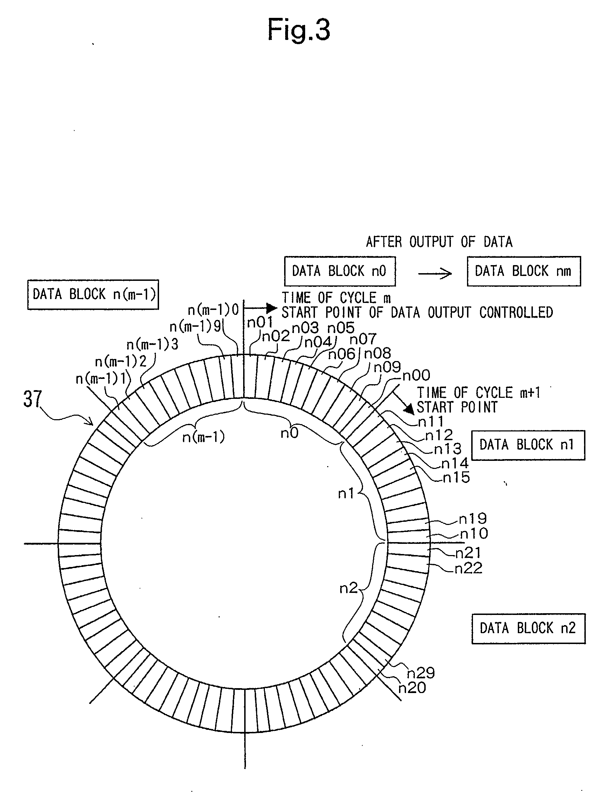

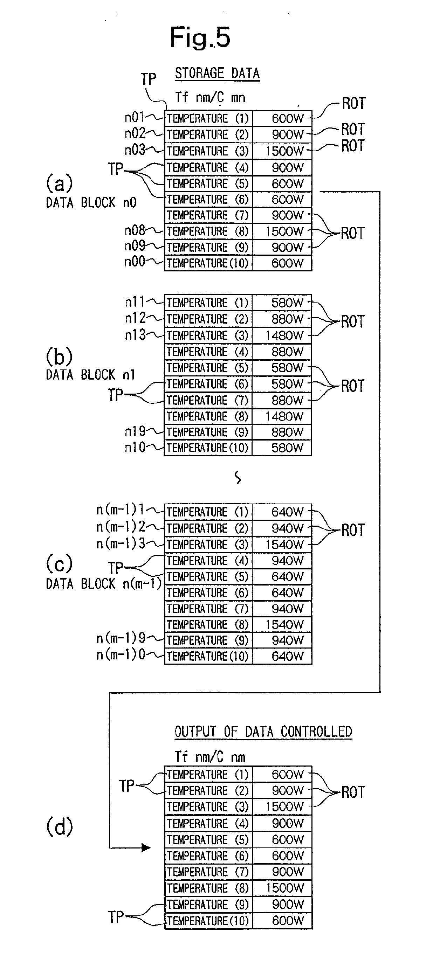

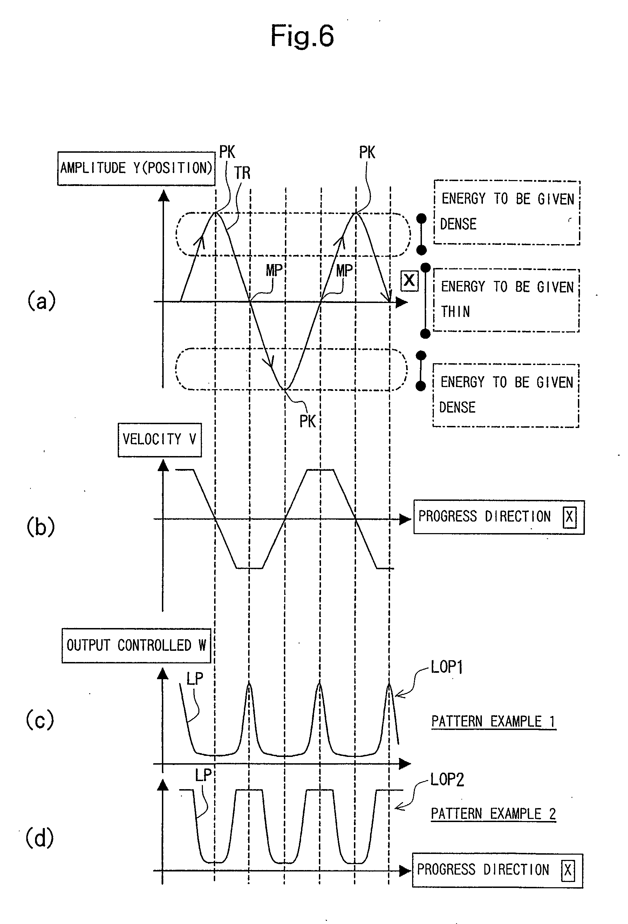

Fig.1 is a schematic perspective view for showing an important portion of a laser beam hardening device to which the present invention is applied, Fig.2 is a block diagram for showing an important portion of a NC unit, Fig.3 is a schematic view for showing contents of laser beam output value memory, Fig.4 is a view for showing a hardening track of laser beam, Fig.5 is a schematic view for showing contents of each data block in the laser beam output value memory, and Fig.6(a) is a chart for showing the track of laser beam (hardening cycle) , Fig.6(b) is a chart for showing velocity of laser beam corresponding to (a) with respect to a workpiece, Fig.6(c) is a chart for showing an example of a laser beam output pattern corresponding to (a) , and Fig.6(d) is a chart for showing the other example of the laser beam output pattern corresponding to (a).

A laser beam hardening device 1 has a laser beam oscillator 2, as shown in Fig.1, and a saddle 5 is connected with the laser beam oscillator 2 through a duct 3 provided being stretchable. The saddle 5 is provided being free to move and drive in a Y-axis direction which is a horizontal direction, through a guide means (not shown) , such as a column, and the saddle 5 is provided with a hardening head 7. Furthermore, the hardening head 7 has an upper reflection barrel 6 fixedly provided at the saddle 5.

The upper reflection barrel 6 is provided with a first reflecting mirror 9, and the upper reflection barrel 6 is provided with a duct 10, being free to stretch and to position in a Z-axis direction which is up and down direction, and being free to rotate, drive and position in an A-axis direction with the Z-axis as its center. On the lower hand of the duct 10 in the figure, a lower reflection barrel 11 is provided, and the lower reflection barrel 11 is provided with a second reflecting mirror 12.

The lower reflection barrel 11 is provided with a duct 13, extending in a horizontal direction, and a side reflection barrel 15 is provided at a top end of the duct 13. The side reflection barrel 15 is provided with a third reflecting mirror 16, and a mirror oscillating unit 17 is connected with the third reflecting mirror 16, being free to oscillate the third reflecting mirror 16 in a direction as shown by arrows D and E with an oscillating axis VA perpendicular to a laser beam optical path 19 between the second reflecting mirror 12 and the third reflecting mirror 16 as its center. A beam splitter 20 is provided inside the laser beam optical path 19 of the duct 13 between the third reflecting mirror 16 and the second reflecting mirror 12. Furthermore, a condensing lens 21 is provided at the lower portion of the side reflection barrel 15 through a torch 24 installed on the lower portion of the side reflection barrel 15.

An infrared thermometer 22 is connected with the beam splitter 20 through a pickup 22a, and a NC unit 23 is connected with the infrared thermometer 22. A mirror control portion 25, connected with the above-mentioned mirror oscillating unit 17, is connected with the NC unit 23. Furthermore, the NC unit 23 is connected with a head drive unit 26 for driving the hardening head 7 and the laser beam oscillator 2.

As shown in Fig.2, the NC unit 23 has a main control portion 30, and with the main control portion 30, a reflecting mirror position computing portion 32 connected with the mirror control unit 25, a head drive control potion 33 connected with the head drive unit 26, a temperature deflection computing portion 35 connected with the infrared thermometer 22, a target laser beam output computing portion 36, a laser beam output value memory 37, a laser beam output synchronous control portion 39 and a laser beam oscillator control portion 40 connected with the laser beam oscillator 2 are connected through a bus line 31.

The laser beam hardening device 1 has the above-mentioned structure. In order to harden a workpiece 27, the workpiece 27 is located on a workpiece table (not shown) on the lower hand of the torch 24, as shown in Fig.1 so as to execute a hardening action on the basis of a hardening program produced in advance, corresponding to the workpiece 27 to be hardened through the NC unit 23 in the above-mentioned state.

At first, the NC unit 23 drives a table (not shown) so as to move and drive the workpiece 27 in the X-axis direction which is a horizontal direction, orthogonal to the Y-axis, and drives the head drive unit 26 so as to move and drive the hardening head 7 including the torch 24 in the Y-axis direction and Z-axis direction and so as to properly rotate and drive the lower reflection barrel 11 in the direction as shown by the arrow A together with the side reflection barrel 15, and so as to properly rotate and drive the side reflection barrel 15 in the direction as shown by the arrow B so that the torch 24 can be faced to a portion to be hardened of the workpiece 27.

Subsequently, the NC unit 23 instructs the laser beam oscillator 2 to oscillate a predetermined output of laser beam 29. Receiving this instruction, the laser beam oscillator 2 injects the laser beam 29. The laser beam 29 injected is entered in the first reflecting mirror 9 passing through the duct 3, and is reflected for the lower hand of the figure by the first reflecting mirror 9, and is further reflected in a horizontal direction by the second reflecting mirror, and passes through the beam splitter 20 so as to enter in the third reflecting mirror 16.

The laser beam 29 entered in the third reflecting mirror is reflected for the lower hand of the figure, that is, in the direction of the workpiece 27 by the third reflecting mirror, and is collected by the condensing lens 21 so as to aim on the workpiece 27. Then, the workpiece 27 is suddenly heated by injecting the laser beam 29 so as to harden.

On this occasion, the workpiece 27 is fed in the arrow X direction by a driving mechanism (not shown) driven by the NC unit 23 at a predetermined feed velocity, and the NC unit 23 drives the mirror oscillating unit 17 through the mirror control unit 25 on the basis of a width to be hardened W1 instructed by the hardening program so as to vibrate the third reflecting mirror 16 in the direction as shown by the arrows D and E. Then, the laser beam 29 entered in the third reflecting mirror 16 is vibrated with the vidth W1 in the direction (the Y-axis direction) orthogonal to the arrow X-axis direction which is the direction of feeding the workpiece 27, and the workpiece 27 is heated within the bounds of the width W1 by the vibrating laser beam 29 up to a predetermined temperature so as to be hardened. On this occasion, the direction of relatively moving the workpiece 27 with respect to the torch 24 is the X-axis direction for making the explanation simple. But, the control axis at the time of positioning the torch 24 with respect to the workpiece 27 is the A-axis which is a rotation axis around the Z-axis and the B-axis which is a rotation axis around the Y-axis in addition to the three control axes respectively orthogonal to each other, that is, the X-axis, the Y-axis and the Z-axis. Then, an optional three-dimensional positioning is possible with respect to the workpiece 27, and any direction of the three-dimensional space is available as the direction of hardening the workpiece 27.

On this occasion, it is necessary to correctly measure a temperature of a portion to be hardened 27a of the workpiece 27 in order to properly harden the portion to be hardened 27a. The temperature of the portion to be hardened 27a is measured by the infrared thermometer 22. The infrared radiation measured by the infrared thermometer 22 is the infrared element of a reflected light 29a from an aiming portion 27b on which the laser beam 29 aims at present, and the reflected light 29a irradiates the beam splitter 20 through the condensing lens 21 and the third reflecting mirror 16 from the aiming portion 27a of the workpiece 27, and is reflected for the upper hand of the figure by the beam splitter 20 and is injected into the pickup 22a of the infrared thermometer 22 so as to be obtained.

The infrared thermometer 22 can measure the temperature of the portion to be hardened 27a on which hardening is actually executed by irradiating the laser beam 29 at this time by the pickup 22a with real time. That is, the beam splitter 20 for giving the reflecting light 29a to the pickup 22a is located on the optical path between the laser beam oscillator 2 and the third reflecting mirror 16 which is the beam oscillating reflection mirror for oscillating the laser beam 29 with respect to the portion to be hardened 27a of the workpiece 27, and is not located on the condensing lens 21 side downstream of the third reflecting mirror 16 oscillating the laser beam 29. Therefore, the reflecting light 29a from the workpiece 27 is always returned to the third reflecting mirror 16 from the condensing lens 21, tracing the path opposite to the aiming path to the portion to be hardened 27a of the workpiece 27, so as to inject into the beam splitter 20. Then, the pickup 22a can always catch the reflecting light 29a from the portion to be hardened 27a and can correctly measure the temperature of the portion to be hardened 27a without providing a specific additional structure. On this occasion, it is desirable that the beam splitter 20 is located on the third reflecting mirror 16 side which is the beam oscillating reflection mirror, if possible, taking the damping of the reflecting light 29a into consideration.

And, such a structure can be also applied to the case where the torch 24 is moved and driven with the five-axes control the above-mentioned so as to take various postures with respect to the workpiece 27. And, the infrared thermometer 22 can catch the temperature of the portion to be hardened 27a through the beam splitter 20 in any posture of the torch 24.

In case of the hardening device having no beam oscillating reflection mirror for oscillating the laser beam 29, the beam splitter 20 may be located at any position between the condensing lens 21 and the laser beam oscillator 2, but it is desirable that the beam splitter 20 is located on the condensing lens 21 side, if possible, taking the damping of the reflecting mirror 29a into consideration.

After the temperature of the portion to be hardened 27a is measured by the infrared thermometer 22, the NC unit judges as to whether or not the temperature reaches the hardening temperature set by the hardening program and properly controls to properly adjust the output of the laser beam oscillator 2 so that the temperature of the portion to be hardened 27a can become the hardening temperature determined by the hardening program, as described hereinafter.

On this occasion, the control of the hardening temperature may be possible by adjusting the feeding velocity of the workpiece 27 or adjusting the vibrating cycle of the laser beam by the mirror oscillating unit 17.

The above-mentioned embodiment refers to the beam splitter 20 which passes the laser beam from the laser beam oscillator 2 as it is and reflects the reflecting light 29a from the portion to be hardened 27a of the workpiece 27, but any reflecting method of the beam splitter 20 is available.

And, any thermometer may be used as the means for measuring the temperature of the portion to be hardened 27a in addition to the infrared thermometer 22, as long as the temperature of the portion to be hardened 27a can be measured from the wave length of the reflecting light 29a.

As shown in Fig.4, the action of hardening the workpiece 27 with the laser beam 29 is executed having a width W1, and a track TR of the laser beam 29 on the workpiece 27 approximates to a sine wave having vibration amplitude of W1/2 since the laser beam 29 is oscillated and driven in the direction as shown by the arrows D and E perpendicular to the direction of feeding the workpiece 27 by the third reflecting mirror 16 and the workpiece 27 is fed at a predetermined feeding velocity in the X-axis direction.

A relative velocity V of the track TR of the laser beam 29 with respect to the workpiece (without taking feeding velocity in the X-axis direction into consideration) is shown in Fig.6(b). The velocity V of the laser beam 29 becomes zero when the track TR reaches a peak PK of its vibration amplitude, and becomes the maximum at the position near a median MP of the amplitude. If the laser beam 29 aims the workpiece 27, maintaining a constant output of the laser beam oscillator 2, the energy density of the laser beam irradiating the workpiece 27 per unit area is made higher near the peak PK of the amplitude where the relative velocity V is late, and the energy density of the laser beam irradiating the workpiece 27 per unit area is made lower near the median MP of the amplitude where the relative velocity V is fast. If the laser beam 29 irradiates the workpiece 27 so as to harden in the above-mentioned state, the hardening is made uneven extending for the whole length of the track TR due to the dispersion of the energy giving density.

Then, the NC unit 23 divides the oscillating cycle of the third reflecting mirror 16 in the direction as shown by the arrows D and E, that is, the track TR of the laser beam, by a predetermined sampling time SP, as shown in Fig.4. In an instance as shown in Fig.4, one cycle of the track TR (the time necessary for one reciprocation of the third reflecting mirror 16, the track of the laser beam on the workpiece in 10ms, for instance, this cycle is referred as "hardening cycle" hereinafter) is divided into ten parts. The NC init 23 instructs the temperature deflection computing portion 35 to obtain a measured temperature TP of the portion to be hardened 27a of the workpiece 27 measured by the infrared thermometer 22 concerning each point of time (1) through (10), that is, every 1ms.

On this occasion, the hardening with laser beam is executed in such a manner that two or more hardening cycles are repeated and the workpiece 27 is fed in a predetermined direction in which the hardening cycle proceeds (the X-axis direction in case of Fig.4).

The temperature deflection computing portion 35 computes a deflection DF between the measured temperature TP of the portion to be hardened 27a input from the infrared thermometer 22 and a determined hardening temperature TD determined in advance by the hardening program so as to output to the target laser beam output computing portion 36. The target laser beam output computing portion 36 computes how to set the output of the laser beam oscillator 2 in order to change the temperature of the portion to be hardened 27a into the determined hardening temperature TD on the basis of the deflection DF so as to obtain as a target laser beam output ROT. The target laser beam output computing portion 36 stores the target laser beam output ROT obtained and the measured temperature TP corresponding therewith together with the data showing the time of measuring temperature ( (1) through (10) in the figure) in the corresponding address of the data block n0 of the laser beam output value memory 37, as shown in Fig.5(a).

That is, the measured temperature TP of time (1) and the target laser beam output ROT at this time are stored in the address n01, the measured temperature TP of time (2) and the target laser beam output ROT at this time are stored in the address n02, and the measured temperature TP of time (3) and the target laser beam output ROT at this time are stored in the address n03. Thereafter, the measured temperature TP of time (10) and the target laser beam output ROT at this time are stored in the address n00 in a similar way so as to store the measured temperature TP of the portion to be hardened 27a and the target laser beam output ROT for one cycle. In case of Fig.5(a), the measured temperature TP is stored at the portion on which "Temperature" is displayed of n0k (k:1 through 9, 0) in each address, numeral in parentheses for right hand with respect to "Temperature" shows the sampling time, and the target laser beam output ROT is stored ,as "600W" for instance, on the further right hand.

By doing so, the temperature of each portion to be hardened 27a and the laser beam output for changing the temperature of the portion to be hardened 27a into a predetermined hardening temperature determined by the hardening program computed as the target laser beam output ROT in each time (1) through (10) concerning one of the oscillating cycles of the third reflecting mirror 16 showing "Cycle 0" of Fig.4 are stored.

The NC unit 23 adjusts the output of the laser beam oscillator 2 so as to become the target laser beam output ROT on the basis of the temperature of each portion to be hardened 27a and the target laser beam output ROT for changing the temperature of the portion to be hardened 27a into a predetermined hardening temperature determined by the hardening program concerning "cycle 0" stored in this way so as to change the temperature of the portion to be hardened 27a into the predetermined hardening temperature determined by the hardening program and so as to execute proper hardening on the workpiece 27. But, a predetermined delay time is necessary in order to control the laser beam oscillator 2 so as to reach the target laser beam output ROT computed. Furthermore, the third reflecting mirror 16 is oscillated and driven in the direction as shown by the arrows D and E before computing the measured temperature TP and the target laser beam output ROT in some portion to be hardened 27a. Then, even if the output of the laser beam oscillator 2 is adjusted immediately the target laser beam output ROT is computed, the laser beam 29 adjusted to the target laser beam output ROT irradiates a shifted position without irradiating the portion to be hardened 27a to which the target laser beam output ROT is computed.

Under this situation, proper hardening action is impossible. Then, the main control portion 30 controls to get the laser beam output synchronous control portion 39 to execute the target laser beam output ROT corresponding to the measured temperature TP obtained at some point of time at the same phase position, that is, in the same sampling time, in the cycle after at least one cycle with respect to the oscillating cycle of the third reflecting mirror 16, that is, the hardening cycle.

In the concrete, the main control portion 30 gets the laser beam output synchronous control portion 39 to execute output control of the laser beam oscillator 2 on the basis of the measured temperature TP obtained and the target laser beam output ROT corresponding to the measured temperature TP in "cycle 0" of Fig.4 in the hardening cycle after m cycles (M: integral number of 1 or more), that is, in "cycle m" of Fig.4. On this occasion, the laser beam oscillator 2 is controlled so that the target laser beam output ROT obtained in each point of time (1) through (10) in "cycle 0" can occur in each point of time (1') through (10') corresponding therewith in "cycle m" . At this time, the laser beam output synchronous control portion 39 can control the laser beam oscillator 2, taking the delay time necessary for the control of the laser beam oscillator 2 into consideration. Therefore, the output of the laser beam oscillator 2 is adjusted to the target laser beam output ROT and is controlled at the same phase of the portion to be hardened after m cycles correctly, and the portion to be hardened 27a is correctly heated up to the temperature near the hardening temperature determined by the hardening program so as to execute proper hardening action.

In the hardening cycles from cycle 0 to cycle m, the main control portion 30 computes the measured temperature TP of the portion to be hardened 27a and the target laser beam output ROT in the points of time (1) through (10) divided into ten of 1ms in subsequent cycle 1, cycle 2 ..... cycle m-1 in a similar way above-mentioned so as to store each in the address of the corresponding data block of the laser beam output value memory 37.

For instance, the measured temperature TP and the target laser beam output ROT in each time (1) through (10) in cycle 1 subsequent to cycle 0 are respectively stored in the address n1k (k: 1 through 9, 0) of the data block n1 as shown in Fig.5(b), and the measured temperature TP and the target laser beam output ROT in each time (1) through (10) in cycle m-1 just before cycle m are respectively stored in the address n(m-1)k (k: 1 through 9, 0) of the data block n(m-1) as shown in Fig.5(c).

The storing form of the data block in the laser beam output value memory 37 is that m numbers of data blocks from the data block 0 to the data block n(m-1) are annularly connected and located, as typically shown in Fig.3. When the measured temperature TP and the target laser beam output ROT are finished to be stored in m numbers of the data blocks, the laser beam output synchronous control portion 39 collectively reads out the next (m+1)th data block, that is, the data of the data block n0 storing the data of cycle 0 so as to store in a proper buffer memory, as shown in Fig.5(d).

In executing cycle m, the laser beam output synchronous control portion 39 reads out the target laser beam output ROT in the corresponding time out of the buffer memory as shown in Fig.5(d) a predetermined time before the hardening cycle reaches each time of (1') through (10'), and instructs the laser beam oscillator control portion 40 to change the laser beam output at this time into the target laser beam output ROT. Receiving this instruction, the laser beam oscillator control portion 40 controls the laser beam output of the laser beam oscillator 2 so as to become the target laser beam output ROT at the time.

That is, the laser beam output synchronous control portion 39 instructs the laser beam oscillator control portion 40 so as to set the output of the laser beam oscillator 2 as 600W which is the target laser beam output ROT obtained in the time (1), for instance, a predetermined time before, 5ms before for instance, the hardening cycle reaches the time (1') of the cycle m which phase is the same as the time (1), and the laser beam oscillator control portion 40 immediately instructs the laser beam oscillator 2 so as change the output of the laser beam oscillator 2 into 600W. By doing so, 600w of the laser beam irradiates the portion to be hardened 27a of the workpiece 27 at the time (1') after a predetermined time, and the portion is heated up to a predetermined hardening temperature determined by the hardening program, approximating the predetermined hardening temperature in comparison with the temperature in the time of cycle 0 so as to execute hardening action.

Subsequently, the corresponding target laser beam output ROT of the time (2), (3), ... ... (9), (10) of cycle 0 is read out so as to control to change the laser beam output ROT into the target laser beam output ROT in cycle m a predetermined time before the laser beam 29 reaches the time (2'), (3'), ... ... (9'), (10'). Then, the portion to be hardened is heated up to the predetermined hardening temperature determined by the program in all sampling time of cycle m, approximating the predetermined hardening temperature in comparison with the temperature in the time of cycle 0 so as to execute the hardening action.

At the time of executing the hardening cycle of cycle m, the temperature of the portion to be hardened 27a is measured and the target laser beam output ROT is computed in each sampling time (2'), (3'), ... ... (9'), (10') concerning cycle m as mentioned before. And, the result is newly stored in the data block n0 collectively read out at the time of executing the hardening cycle of cycle m of the laser beam output value memory 37, as shown in Fig.5(a).

In the subsequent hardening cycles to be executed, the laser beam output is controlled on the basis of' the measured temperature TP of the portion to be hardened 27a obtained in the past hardening cycle before m cycles and the target laser beam output ROT corresponding to the measured temperature TP, and furthermore, the temperature is measured in the hardening cycle in the controlled state and the corresponding target laser beam output ROT is computed so as to influence the next hardening cycle after m cycles. Therefore, the hardening temperature of the portion to be hardened 27a in each hardening cycle is controlled, unlimitedly approaching the hardening temperature designated by the hardening program every time the hardening cycle is repeated.

On this occasion, the moving velocity of the laser beam 29 approaches zero in both end portions of the amplitude of the laser beam of the hardening cycle as shown in Fig.6(a) and (b), and then, the density of energy giving to the workpiece 27 per unit area becomes high. As clear from the target laser beam output ROT of each time in each data block, the laser beam output is most narrowed as shown in the time (1), (5), (6), and (10) of each data block of Fig.5 so that the workpiece 27 can be prevented from melting by giving excess energy to the portion to be hardened 27a of the workpiece 27.

And, the moving velocity of the laser beam 29 becomes gradually high in the center portion of the amplitude of the laser beam of the hardening cycle and is the highest near the position where the amplitude is zero and is gradually decreased thereafter, as shown in Fig.6(b). Then, the density of the energy giving to the workpiece 27 per unit area becomes gradually low, and is gradually increased thereafter.

Therefore, the laser beam output is adjusted in such a manner that the laser beam output is increased with approaching the point where the amplitude is zero from the time (1) or (6)and is decreased for the time (5) or (10) with the amplitude zero as a peak as shown in the times (2), (3), (4), (7), (8), (9) of the respective data blocks of Fig.5, so that equal energy can be given to the portion to be hardened 27a of the workpiece 27 over all amplitude of the laser beam, that is, over the hardening cycle, and the hardening temperature of the workpiece 27 can be kept the hardening temperature determined by the hardening program in all hardening cycles.

In the above-mentioned embodiment, the target laser beam output ROT is computed on the basis of the measured temperature TP detected of the portion to be hardened 27a so as to become a predetermined hardening temperature determined by the hardening program at the target laser beam output computing portion 36, and the temperature of the portion to be hardened 27a is controlled so as to become a predetermined hardening temperature in such a manner that the laser beam output of the laser beam oscillator 2 is made the target laser beam output ROT in the corresponding portion to be hardened 27a of the hardening cycle after at least one cycle on the basis of the target laser beam output ROT computed. But, an open loop control may be also possible in the present invention in addition to the feedback loop mentioned before so long as the laser beam output of both end portions of the amplitude of the laser beam can be made lower in comparison with one of the center portion in the hardening with laser beam for hardening the workpiece 27 by oscillating the laser beam over a predetermined width W1.

That is, the NC unit 23 is provided with an output pattern memory 41, connecting with the bus line 31, as shown by a broken line of Fig.2. In the output pattern memory 41, a laser beam output pattern LOP1, LOP2 or the like wherein laser beam output LP is made low on both sides of the amplitude of laser beam, that is, on both sides of the hardening cycle, and the laser beam output LP is made high in the center portion as shown in Fig.6(c) or Fig.6(d) is stored. A plurality of laser output patterns LOP1 or LOP2 are prepared according to the shape and the material of a workpiece so as to properly selectively use. At the time of hardening on a workpiece 27, the laser beam output pattern LOP1 or LOP2 is read out of the output pattern memory 41, and the laser beam output synchronous control portion 39 adjusts the output of the laser beam injected from the laser beam oscillator 2 on the basis of the laser beam output pattern LOP1 or LOP2 according to the position where the third reflecting mirror oscillates by the reflecting mirror position computing portion 32, that is, the position of the portion to be hardened 27a in the hardening cycle. By doing so, energy is equally given to the portion to be hardened 27a of the workpiece 27 over all amplitude of the laser beam, that is, over the hardening cycle so that the hardening temperature on the workpiece 27 can be kept the hardening temperature designated by the hardening program in all of the hardening cycle.

The present invention is explained on the basis of the embodiment heretofore. The embodiments which are described in the present specification are illustrative and not limiting. The scope of the invention is designated by the accompanying claims and is not restricted by the descriptions of the specific embodiments. Accordingly, all the transformations and changes belonging to the claims are included in the scope of the present invention.

## Claims

1. Method of controlling hardening with laser beam by irradiating laser beam on a workpiece, comprising:
irradiating said laser beam on a workpiece, oscillating with a predetermined amplitude so as to heat said workpiece over a predetermined hardening width by said oscillating laser beam; and
controlling laser beam output of said laser beam in such a manner that said laser beam output in both end portions of said amplitude is made lower than one of a center portion of said amplitude.

2. The method of controlling hardening with laser beam of claim 1, wherein said laser beam output is adjusted so that a hardening temperature of said workpiece when it is heated by irradiating said laser beam becomes a predetermined hardening temperature in all portions to be hardened of said workpiece.

3. The method of controlling hardening with laser beam of claim 2, wherein said hardening temperature of said workpiece is measured by acquiring reflecting light of said laser beam irradiating on said workpiece.

4. The method of controlling hardening with laser beam of claim 1, wherein a laser beam output pattern corresponding to a hardening action is prepared, and said laser beam output of said laser beam is controlled in such a manner that said laser beam output in both end portions of said amplitude is made lower than one of said center portion of said amplitude on the basis of said laser beam output pattern.

5. Method of controlling hardening with laser beam when hardening with laser beam is done by irradiating laser beam on a workpiece, comprising:
forming a hardening cycle by a track of said laser beam by irradiating said laser beam on said workpiece, oscillating said laser beam with a predetermined amplitude and executing two or more cycles of said hardening cycle so as to harden said workpiece;
detecting a temperature of a portion to be hardened of said workpiece at some point of time during said hardening cycle and adjusting laser beam output of said laser beam in a subsequent hardening cycle after said temperature of said portion to be hardened is detected on the basis of a deflection between said temperature detected and a predetermined hardening temperature; and
controlling density of energy of said laser beam giving to said workpiece in said hardening cycle so as to make equal during said subsequent hardening cycle.

6. The method of controlling hardening with laser beam of claim 5, wherein a point of time when said laser beam output is adjusted during said subsequent hardening cycle is the same phase in said hardening cycle as a point of time when temperature of said portion to be hardened of said workpiece is detected.

7. Laser beam hardening device, comprising:
a laser beam oscillator;
a guide means for guiding laser beam injected from said laser beam oscillator;
a condensing lens located at said guide means for collecting said laser beam and irradiating said laser beam to a portion to be hardened of a workpiece;
a beam oscillating means for oscillating said laser beam with a predetermined amplitude; and
a laser beam output controlling means for controlling laser beam output of said laser beam in such a manner that said laser beam output in both end portions of said amplitude is made lower than one of a center portion of said amplitude.

8. Laser beam hardening device, comprising:
a laser beam oscillator;
a guide means for guiding laser beam injected from said laser beam oscillator;
a condensing lens located at said guide means for collecting said laser beam and irradiating said laser beam to a portion to be hardened of a workpiece;
a beam oscillating means for oscillating said laser beam with a predetermined amplitude;
a temperature detecting means for detecting temperature of said portion to be hardened of said workpiece;
a target laser beam output computing means for computing a target laser beam output to be an object from a deflection between said temperature detected and a predetermined hardening temperature on the basis of temperature of said portion to be hardened of said workpiece of some point of time in a hardening cycle, which is detected by said temperature detecting means; and
a laser beam output controlling means for adjusting said laser beam output of said laser beam on the basis of said target laser beam output computed in a subsequent hardening cycle after said temperature of said portion to be hardened is detected.

9. Laser beam hardening device, comprising:
a laser beam oscillator;
a guide means for guiding laser beam injected from said laser beam oscillator;
a condensing lens located at said guide means for collecting said laser beam and irradiating said laser beam to a portion to be hardened of a workpiece;
a beam splitter provided in said guide means between said laser beam oscillator and said condensing lens for sorting reflecting light reflected from said portion to be hardened; and
a temperature measuring means provided at said beam splitter for measuring temperature of said portion to be hardened from said reflecting light sorted by said beam splitter.

10. The laser beam hardening device of claim 9, wherein a beam oscillating means for oscillating said laser beam with a predetermined width is provided between said beam splitter and said condensing lens.

11. The laser beam hardening device of claim 9, wherein said temperature measuring means is an infrared thermometer.

12. The laser beam hardening device of claim 9, wherein said condensing lens is provided, being relatively movable and drivable in a three-dimensional direction with respect to said workpiece.

13. Laser beam hardening device, comprising:
a laser beam oscillator;
a guide unit for guiding laser beam injected from said laser beam oscillator;
a condensing lens located at said guide unit for collecting said laser beam and irradiating said laser beam to a portion to be hardened of a workpiece;
a beam oscillating unit for oscillating said laser beam with a predetermined amplitude; and
a laser beam output controlling unit for controlling laser beam output of said laser beam in such a manner that said laser beam output in both end portions of said amplitude is made lower than one of a center portion of said amplitude.

14. Laser beam hardening device, comprising:
a laser beam oscillator;
a guide unit for guiding laser beam injected from said laser beam oscillator;
a condensing lens located at said guide unit for collecting said laser beam and irradiating said laser beam to a portion to be hardened of a workpiece;
a beam oscillating unit for oscillating said laser beam with a predetermined amplitude;
a temperature detecting unit for detecting temperature of said portion to be hardened of said workpiece;
a target laser beam output computing unit for computing a target laser beam output to be an object from a deflection between said temperature detected and a predetermined hardening temperature on the basis of temperature of said portion to be hardened of said workpiece of some point of time in a hardening cycle, which is detected by said temperature detecting unit; and
a laser beam output controlling unit for adjusting said laser beam output of said laser beam on the basis of said target laser beam output computed in a subsequent hardening cycle after said temperature of said portion to be hardened is detected.

15. Laser beam hardening device, comprising:
a laser beam oscillator;
a guide unit for guiding laser beam injected from said laser beam oscillator;
a condensing lens located at said guide unit for collecting said laser beam and irradiating said laser beam to a portion to be hardened of a workpiece;
a beam splitter provided in said guide unit between said laser beam oscillator and said condensing lens for sorting reflecting light reflected from said portion to be hardened; and
a temperature measuring unit provided at said beam splitter for measuring temperature of said portion to be hardened from said reflecting light sorted by said beam splitter.

16. The laser beam hardening device of claim 15, wherein a beam oscillating unit for oscillating said laser beam with a predetermined width is provided between said beam splitter and said condensing lens.

17. The laser beam hardening device of claim 15, wherein said temperature measuring unit is an infrared thermometer.
